(19)

Europäisches
Patentamt
European
Patent Office
Office européen
des brevets

(11) **EP 4 080 841 A1**

(12) **EUROPEAN PATENT APPLICATION**
published in accordance with Art. 153(4) EPC

(43) Date of publication:
**26.10.2022 Bulletin 2022/43**

(21) Application number: **20915089.5**

(22) Date of filing: **15.09.2020**

(51) International Patent Classification (IPC):
***H04L 27/26*** *(2006.01)*

(52) Cooperative Patent Classification (CPC):
**H04L 5/00; H04L 27/26**

(86) International application number:
**PCT/CN2020/115310**

(87) International publication number:
**WO 2021/147348 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2020 CN 202010072372**

(71) Applicant: **HUAWEI TECHNOLOGIES CO., LTD.
Shenzhen, Guangdong 518129 (CN)**

(72) Inventors:
• **LUO, Jiajin
Shenzhen, Guangdong 518129 (CN)**
• **LIU, Chenchen
Shenzhen, Guangdong 518129 (CN)**
• **HAN, Xiao
Shenzhen, Guangdong 518129 (CN)**

• **YU, Jian
Shenzhen, Guangdong 518129 (CN)**
• **GAN, Ming
Shenzhen, Guangdong 518129 (CN)**
• **ZHOU, Baojian
Shenzhen, Guangdong 518129 (CN)**
• **ZHANG, Meihong
Shenzhen, Guangdong 518129 (CN)**
• **PENG, Xiaohui
Shenzhen, Guangdong 518129 (CN)**
• **DU, Rui
Shenzhen, Guangdong 518129 (CN)**
• **RONG, Zhichao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **TARGET DETECTION METHOD, APPARATUS, AND SYSTEM**

(57) This application provides a target detection method, apparatus, and system. The method includes: determining, by a first device, N first orthogonal frequency division multiplexing (OFDM) symbols, where N is a positive integer greater than or equal to 2, each of the N first OFDM symbols includes a first subcarrier, phases of first subcarriers in any two adjacent first OFDM symbols in the N first OFDM symbols are continuous, and data carried in the first subcarrier is preset data; and sending, by the first device, the N first OFDM symbols, where the first subcarriers in the N first OFDM symbols are used to detect a target. According to the target detection method provided in embodiments of this application, accuracy of detecting the target by a communication device can be improved without changing hardware of the communication device.

Method 400

```
A first device determines N first orthogonal frequency division
multiplexing (OFDM) symbols, where N is a positive integer
greater than or equal to 2, each of the N first OFDM symbols
includes a first subcarrier, phases of first subcarriers in any two
adjacent first OFDM symbols in the N first OFDM symbols are
continuous, and data carried in the first subcarrier is preset data        410

                                  │

The first device sends the N first OFDM symbols                            420

                                  │

A second device receives N second OFDM symbols, where the
N second OFDM symbols one-to-one correspond to the N first
OFDM symbols, each of the N second OFDM symbols includes
a second subcarrier, phases of second subcarriers in any two
adjacent second OFDM symbols in the N second OFDM
symbols are continuous, and data carried in the second
subcarrier is the preset data                                             430

                                  │

The second device detects a target based on phase differences
between the second subcarriers in the N second OFDM
symbols and the first subcarriers in the N first OFDM symbols             440
```

FIG. 4

EP 4 080 841 A1

# EP 4 080 841 A1

## Description

This application claims priority to Chinese Patent Application No. 202010072372.0, filed with the China National Intellectual Property Administration on January 21, 2020 and entitled "TARGET DETECTION METHOD, APPARATUS, AND SYSTEM", which is incorporated herein by reference in its entirety.

## TECHNICAL FIELD

This application relates to the field of wireless communication, and more specifically, to a target detection method, apparatus, and system.

## BACKGROUND

When a radar system is used to detect a target (for example, measure a distance or a speed), a transmit end of the radar system transmits a detection signal known to a receive end. The detection signal is received by the receive end of the radar system after being reflected by the target. The receive end may detect the target based on a phase difference of the received detection signal.

The foregoing positioning process needs to be implemented by using dedicated hardware. However, a mobile communication device (for example, a Wi-Fi device or a wearable device) generally does not have the dedicated hardware. Without changing hardware of the communication device, the target cannot be detected by using the foregoing detection signal in the communication device.

Therefore, without changing the hardware of the communication device, how the communication device accurately detects the target is a problem that needs to be urgently resolved.

## SUMMARY

This application provides a target detection method, apparatus, and system, to improve accuracy of detecting a target by a communication device without changing hardware of the communication device.

According to a first aspect, a target detection method is provided. The method includes: A first device determines N first orthogonal frequency division multiplexing (OFDM) symbols, where N is a positive integer greater than or equal to 2, each of the N first OFDM symbols includes a first subcarrier, phases of first subcarriers in any two adjacent first OFDM symbols in the N first OFDM symbols are continuous, and data carried in the first subcarrier is preset data. The first device sends the N first OFDM symbols, where the first subcarriers in the N first OFDM symbols are used to detect a target.

With reference to the first aspect, in some implementations of the first aspect, the method further includes: The first device receives N second OFDM symbols, where the N second OFDM symbols one-to-one correspond to the N first OFDM symbols, each of the N second OFDM symbols includes a second subcarrier, phases of second subcarriers in any two adjacent second OFDM symbols in the N second OFDM symbols are continuous, and data carried in the second subcarrier is the preset data. The first device detects the target based on phase differences between the second subcarriers in the N second OFDM symbols and the first subcarriers in the N first OFDM symbols.

Based on the foregoing solution, this application provides a method for determining phase continuity of pilot subcarriers (that is, the first subcarriers) in an OFDM signal (that is, the N first OFDM symbols). Without changing hardware of a communication device, by using the OFDM signal (that is, the N first OFDM symbols) whose phases of the pilot subcarriers are continuous, the communication device (that is, the first device) can improve accuracy of detecting the target (for example, measuring a distance and/or a speed).

With reference to the first aspect, in some implementations of the first aspect, the determining N first OFDM symbols includes: compensating for phases of third subcarriers in N reference OFDM symbols based on N phase compensation values, to obtain the N first OFDM symbols, where phases of third subcarriers in any two adjacent reference OFDM symbols in the N reference OFDM symbols are discontinuous, and the compensated third subcarriers are the first subcarriers.

With reference to the first aspect, in some implementations of the first aspect, the compensating for phases of third subcarriers in N reference OFDM symbols based on phase compensation values, to obtain the N first OFDM symbols includes: performing phase compensation on a phase of a third subcarrier in an $i^{th}$ reference OFDM symbol in the N reference OFDM symbols based on an $i^{th}$ phase compensation value in the N phase compensation values, to obtain an $i^{th}$ first OFDM symbol in the N first OFDM symbols, where the $i^{th}$ phase compensation value is a difference between a phase value corresponding to an end moment of an $(i-1)^{th}$ reference OFDM symbol in the N reference OFDM symbols and a phase value at a start moment of a guard interval (GI) corresponding to the $i^{th}$ reference OFDM symbol, and i = 2, ..., and N.

2

With reference to the first aspect, in some implementations of the first aspect, a subcarrier at a $K_i^{th}$ location in the $i^{th}$ first OFDM symbol in the N first OFDM symbols is the first subcarrier in the $i^{th}$ first OFDM symbol, $K_i$ is an integer multiple of a ratio of a length of the first OFDM symbol to a length of a GI before the $i^{th}$ first OFDM symbol, $K_i$ is an integer greater than or equal to 1, and i = 1, ..., and N.

With reference to the first aspect, in some implementations of the first aspect, before the first device sends the N first OFDM symbols, the method further includes: determining a length of a GI before each first OFDM symbol based on a period of the first subcarrier.

With reference to the first aspect, in some implementations of the first aspect, each of the N first OFDM symbols further includes a fourth subcarrier, and the fourth subcarrier is used to perform data communication.

With reference to the first aspect, in some implementations of the first aspect, before the N first OFDM symbols are sent, the method further includes: sending a header, where the header carries indication information, and the indication information is used to indicate that the phases of the first subcarriers in the any two adjacent first OFDM symbols in the N first OFDM symbols are continuous.

According to a second aspect, a target detection apparatus is provided. The apparatus includes: a processing unit, configured to determine N first orthogonal frequency division multiplexing (OFDM) symbols, where N is a positive integer greater than or equal to 2, each of the N first OFDM symbols includes a first subcarrier, phases of first subcarriers in any two adjacent first OFDM symbols in the N first OFDM symbols are continuous, and data carried in the first subcarrier is preset data; and a transceiver unit, configured to send the N first OFDM symbols, where the first subcarriers in the N first OFDM symbols are used to detect a target.

With reference to the second aspect, in some implementations of the second aspect, the transceiver unit is further configured to receive N second OFDM symbols, where the N second OFDM symbols one-to-one correspond to the N first OFDM symbols, each of the N second OFDM symbols includes a second subcarrier, phases of second subcarriers in any two adjacent second OFDM symbols in the N second OFDM symbols are continuous, and data carried in the second subcarrier is the preset data. The processing unit is further configured to detect the target based on phase differences between the second subcarriers in the N second OFDM symbols and the first subcarriers in the N first OFDM symbols.

Based on the foregoing solution, without changing hardware of a communication device, by using an OFDM signal (that is, the N first OFDM symbols) whose phases of pilot subcarriers are continuous, the communication device (that is, a first device) can improve accuracy of detecting the target (for example, measuring a distance and/or a speed).

With reference to the second aspect, in some implementations of the second aspect, the processing unit is specifically configured to: compensate for phases of third subcarriers in N reference OFDM symbols based on N phase compensation values, to obtain the N first OFDM symbols, where phases of third subcarriers in any two adjacent reference OFDM symbols in the N reference OFDM symbols are discontinuous, and the compensated third subcarriers are the first subcarriers.

With reference to the second aspect, in some implementations of the second aspect, the processing unit is specifically configured to: perform phase compensation on a phase of a third subcarrier in an $i^{th}$ reference OFDM symbol in the N reference OFDM symbols based on an $i^{th}$ phase compensation value in the N phase compensation values, to obtain an $i^{th}$ first OFDM symbol in the N first OFDM symbols, where the $i^{th}$ phase compensation value is a difference between a phase value corresponding to an end moment of an $(i-1)^{th}$ reference OFDM symbol in the N reference OFDM symbols and a phase value at a start moment of a guard interval (GI) corresponding to the $i^{th}$ reference OFDM symbol, and i = 2, ..., and N.

With reference to the second aspect, in some implementations of the second aspect, a subcarrier at a $K_i^{th}$ location in the $i^{th}$ first OFDM symbol in the N first OFDM symbols is the first subcarrier in the $i^{th}$ first OFDM symbol, $K_i$ is an integer multiple of a ratio of a length of the first OFDM symbol to a length of a GI before the $i^{th}$ first OFDM symbol, $K_i$ is an integer greater than or equal to 1, and i = 1, ..., and N.

With reference to the second aspect, in some implementations of the second aspect, the processing unit is further configured to: before the first device sends the N first OFDM symbols, determine a length of a GI before each first OFDM symbol based on a period of the first subcarrier.

With reference to the second aspect, in some implementations of the second aspect, each of the N first OFDM symbols further includes a fourth subcarrier, and the fourth subcarrier is used to perform data communication.

With reference to the second aspect, in some implementations of the second aspect, the transceiver unit is further configured to: send a header before sending the N first OFDM symbols, where the header carries indication information, and the indication information is used to indicate that the phases of the first subcarriers in the any two adjacent first OFDM symbols in the N first OFDM symbols are continuous.

According to a third aspect, a target detection system is provided. The system includes: a first device, configured to determine N first orthogonal frequency division multiplexing (OFDM) symbols, where N is a positive integer greater than or equal to 2, each of the N first OFDM symbols includes a first subcarrier, phases of first subcarriers in any two adjacent first OFDM symbols in the N first OFDM symbols are continuous, data carried in the first subcarrier is preset data, and the first device is further configured to send the N first OFDM symbols; and a second device, configured to receive N second OFDM symbols, where the N second OFDM symbols one-to-one correspond to the N first OFDM symbols, each of the N second OFDM symbols includes a second subcarrier, phases of second subcarriers in any two adjacent second OFDM symbols in the N second OFDM symbols are continuous, data carried in the second subcarrier is the preset data, and the second device is further configured to detect a target based on phase differences between the second subcarriers in the N second OFDM symbols and the first subcarriers in the N first OFDM symbols.

In an implementation, the first device and the second device are a same device. In this case, the first device not only transmits the N first OFDM symbols as a transmit end, but also receives the N second OFDM symbols as a receive end.

In another implementation, the first device and the second device are different devices. In this case, the first device transmits the N first OFDM symbols as a transmit end, and the second device receives the N second OFDM symbols as a receive end.

Based on the foregoing solution, this application provides a method for determining phase continuity of pilot subcarriers (that is, the first subcarriers) in an OFDM signal (that is, the N first OFDM symbols). Without changing hardware of a communication device, by using the OFDM signal whose phases of the pilot subcarriers are continuous, the communication device (that is, the second device) can improve accuracy of detecting the target (for example, measuring a distance and/or a speed).

With reference to the third aspect, in some implementations of the third aspect, the first device is specifically configured to: compensate for phases of third subcarriers in N reference OFDM symbols based on N phase compensation values, to obtain the N first OFDM symbols, where phases of third subcarriers in any two adjacent reference OFDM symbols in the N reference OFDM symbols are discontinuous, and the compensated third subcarriers are the first subcarriers.

With reference to the third aspect, in some implementations of the third aspect, the first device is specifically configured to: perform phase compensation on a phase of a third subcarrier in an $i^{th}$ reference OFDM symbol in the N reference OFDM symbols based on an $i^{th}$ phase compensation value in the N phase compensation values, to obtain an $i^{th}$ first OFDM symbol in the N first OFDM symbols, where the $i^{th}$ phase compensation value is a difference between a phase value corresponding to an end moment of an $(i-1)^{th}$ reference OFDM symbol in the N reference OFDM symbols and a phase value at a start moment of a guard interval (GI) corresponding to the $i^{th}$ reference OFDM symbol, and i = 2, ..., and N.

With reference to the third aspect, in some implementations of the third aspect, a subcarrier at a $K_i^{th}$ location in the $i^{th}$ first OFDM symbol in the N first OFDM symbols is the first subcarrier in the $i^{th}$ first OFDM symbol, $K_i$ is an integer multiple of a ratio of a length of the first OFDM symbol to a length of a GI before the $i^{th}$ first OFDM symbol, $K_i$ is an integer greater than or equal to 1, and i = 1, ..., and N.

With reference to the third aspect, in some implementations of the third aspect, the first device is further configured to: before the first device sends the N first OFDM symbols, determine a length of a GI before each first OFDM symbol based on a period of the first subcarrier.

With reference to the third aspect, in some implementations of the third aspect, each of the N first OFDM symbols further includes a fourth subcarrier, and the fourth subcarrier is used to perform data communication.

Based on the foregoing solution, by using the OFDM signal, the communication device (that is, the second device) can improve accuracy of detecting the target (for example, measuring a distance and/or a speed) by the communication device, and can further implement high-speed communication with another communication device (that is, the first device). In this way, fusion of detection and communication is effectively implemented without affecting communication efficiency between communication devices.

With reference to the third aspect, in some implementations of the third aspect, the first device is further configured to: send a header before sending the N first OFDM symbols, where the header carries indication information, and the indication information is used to indicate that the phases of the first subcarriers in the any two adjacent first OFDM symbols in the N first OFDM symbols are continuous.

According to a fourth aspect, a target detection device is provided, including a processor. The processor is coupled to a memory, and may be configured to execute instructions in the memory, to implement the method in any one of the possible implementations of the first aspect or the second aspect. Optionally, the target detection device further includes the memory. Optionally, the target detection device further includes a communication interface, and the processor is coupled to the communication interface.

In an implementation, the target detection device is a communication device, for example, a first device or a second device in an embodiment of this application. When the target detection device is the communication device, the communication interface may be a transceiver or an input/output interface.

In another implementation, the target detection device is a chip disposed in a communication device, for example, a chip disposed in a first device or a second device in an embodiment of this application. When the target detection device is the chip disposed in the communication device, the communication interface may be an input/output interface.

Optionally, the transceiver may be a transceiver circuit. Optionally, the input/output interface may be an input/output circuit.

According to a fifth aspect, a processor is provided, including an input circuit, an output circuit, and a processing circuit. The processing circuit is configured to receive a signal by using the input circuit, and transmit a signal by using the output circuit, so that the processor performs the method in any one of the possible implementations of the first aspect or the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a processing apparatus is provided, including a processor and a memory. The processor is configured to read instructions stored in the memory, and may receive a signal by using a receiver, and transmit a signal by using a transmitter, to perform the method in any one of the possible implementations of the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in the embodiments of this application.

It should be understood that, in a related data interaction process, for example, sending indication information may be a process of outputting the indication information from the processor, and receiving capability information may be a process of receiving input capability information by the processor. Specifically, data output by the processor may be output to the transmitter, and input data received by the processor may come from the receiver. The transmitter and the receiver may be collectively referred to as a transceiver.

The processing apparatus in the sixth aspect may be a chip. The processor may be implemented by using hardware, or may be implemented by using software. When implemented by using hardware, the processor may be a logic circuit, an integrated circuit, or the like. When implemented by using software, the processor may be a general purpose processor, and is implemented by reading software code stored in the memory. The memory may be integrated into the processor, or may be located outside the processor and exist independently.

According to a seventh aspect, a computer program product is provided. The computer program product includes a computer program (which may also be referred to as code or instructions). When the computer program is run, a computer is enabled to perform the method in any one of the possible implementations of the first aspect or the second aspect.

According to an eighth aspect, a computer-readable medium is provided. The computer-readable medium stores a computer program (which may also be referred to as code or instructions). When the computer program is run on a computer, the computer is enabled to perform the method in any one of the possible implementations of the first aspect or the second aspect.

**BRIEF DESCRIPTION OF DRAWINGS**

FIG. 1 is a schematic diagram in which phases of pilot subcarriers in adjacent OFDM symbols are discontinuous;
FIG. 2 is a schematic diagram in which phases of pilot subcarriers in adjacent OFDM symbols are continuous;
FIG. 3 is a schematic diagram of an application scenario applicable to an embodiment of this application;
FIG. 4 is a schematic flowchart of a target detection method 400 according to an embodiment of this application;
FIG. 5 is a case in which phases of adjacent subcarriers in OFDM symbols change with a time;
FIG. 6 is a case in which phases of adjacent subcarriers in OFDM symbols change with a time;
FIG. 7 is a schematic flowchart of a target detection method 700 according to an embodiment of this application;
FIG. 8 is a schematic block diagram of a target detection apparatus according to an embodiment of this application; and
FIG. 9 is a schematic block diagram of a target detection apparatus according to an embodiment of this application.

## DESCRIPTION OF EMBODIMENTS

The following describes technical solutions of this application with reference to accompanying drawings.

The technical solutions in embodiments of this application may be applied to a wireless local area network (wireless local area network, WLAN). The embodiments of this application are further applicable to any protocol in Institute of Electrical and Electronics Engineers (institute of electrical and electronics engineers, IEEE) 802.11 series protocols currently used by the WLAN, for example, are applicable to a communication system of an IEEE 802.11az protocol currently supported by the WLAN, or applicable to a communication system supporting a next generation protocol of 802.11az, or applied to a communication system supporting 802.11be, or applied to a wireless fidelity sensing (wireless fidelity sensing) communication system or another scenario in which positioning needs to be performed.

For ease of understanding, before the embodiments of this application are described, related terms in this application are first briefly described.

1. Orthogonal frequency division multiplexing (orthogonal frequency division multiplexing, OFDM): is a multi-carrier modulation technology. A main idea is to divide a channel into orthogonal sub-channels, convert a high-speed data signal into parallel low-speed sub-streams, and modulate the parallel low-speed sub-streams to be transmitted on the sub-channels. Quadrature signals may be separated by using a related technology at a receive end, so that mutual interference between the sub-channels may be reduced. Signal bandwidth on each sub-channel is less than correlation bandwidth of the channel. Therefore, it may be considered that flat fading occurs on each sub-channel, so that intersymbol interference may be eliminated. In addition, because bandwidth of each sub-channel is only a small fraction of bandwidth of the original channel, channel equalization becomes relatively easy.

In OFDM, carriers are orthogonal to each other. Each carrier has an integer quantity of carrier periods within a symbol time, and a spectral null of each carrier overlaps a null of an adjacent carrier. In this way, inter-carrier interference is reduced. Due to partial overlap between carriers, frequency band utilization is improved compared with a conventional information transmission technology.

In an OFDM propagation process, through serial-to-parallel conversion, a high-speed information data stream is distributed to sub-channels with a relatively low rate for transmission, and a symbol period in each sub-channel is relatively increased. In this way, intersymbol interference of a system caused by time dispersion caused by multipath delay spread of a radio channel may be reduced.

2. Pilot subcarrier (pilot subcarrier): is a subcarrier that is in an OFDM symbol and in which a preset sequence is placed. The pilot subcarrier is generally used to help detect and correct a phase deviation of a subcarrier, thereby improving accuracy of parsing a data subcarrier.

3. Data subcarrier (data subcarrier): The data subcarrier is a subcarrier in which to-be-transmitted data is placed.

4. Guard interval (guard interval, GI): The GI is added at a transmit end of an OFDM system, mainly to eliminate intersymbol interference (inter-symbol interference, ISI) and inter-channel interference (inter-channel interference, ICI) that are caused by multipath. A method is to fill in a cyclic prefix (cyclic prefix, CP) in a guard interval of an OFDM symbol, to ensure that a quantity of waveform periods included in a delay copy of the OFDM symbol in a fast Fourier transform (fast Fourier transform, FFT) period is also an integer. In this way, a signal whose delay is less than the guard interval does not generate ISI in a demodulation process.

5. Doppler shift (Doppler Shift, DS): When a mobile station moves in a direction at a constant rate, a phase and a frequency change due to a difference in a propagation distance, and such a change is generally referred to as a Doppler shift.

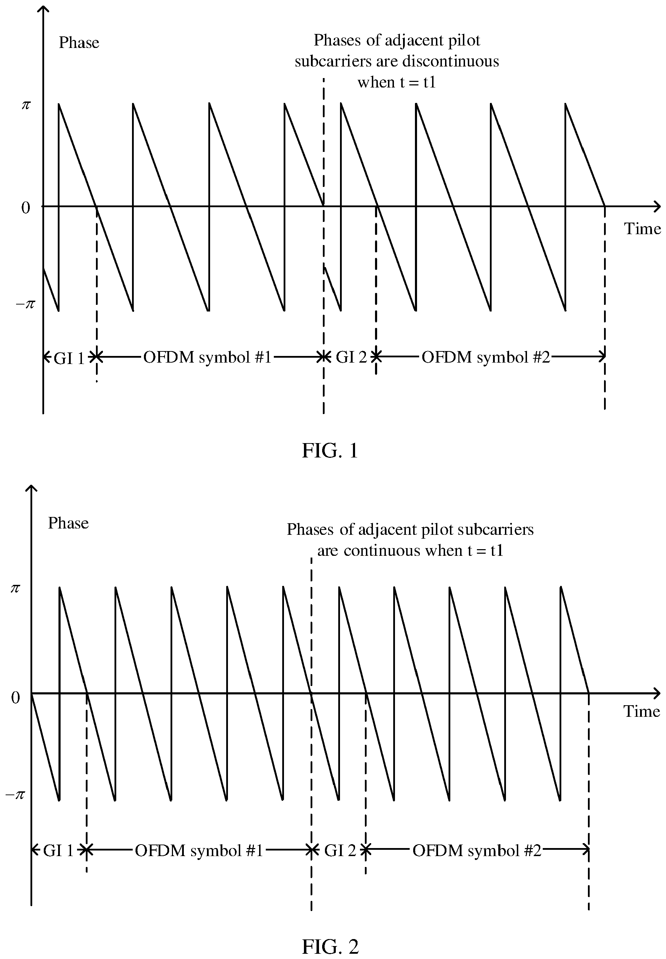

To avoid interference between signals, a guard interval (GI) is inserted before an OFDM symbol when a signal is modulated by using an OFDM technology. Due to existence of the GI and a location relationship between pilot subcarriers, phases of pilot subcarriers at a same location in adjacent OFDM symbols are caused to be discontinuous (referring to FIG. 1).

FIG. 1 is a schematic diagram in which phases of pilot subcarriers in adjacent OFDM symbols are discontinuous.

As shown in FIG. 1, an OFDM symbol #1 and an OFDM symbol #2 are included in a time length T, where a GI 1 is a guard interval of the OFDM symbol #1, and a GI 2 is a guard interval of the OFDM symbol #2. It should be understood that FIG. 1 shows only a case in which a phase of one subcarrier in an OFDM symbol changes with a time, and it is assumed that the subcarrier is a pilot subcarrier.

It may be learned from FIG. 1 that, at a moment t1, a phase of a pilot subcarrier in the OFDM symbol #1 is greater than 0, and a phase of a pilot subcarrier in the OFDM symbol #2 is less than 0. In this case, it may be considered that phases of pilot subcarriers in the adjacent OFDM symbol #1 and OFDM symbol #2 are discontinuous.

A transmit end sends an OFDM signal, and when phases of adjacent OFDM symbols in the OFDM signal are intermittent (that is, when phases of adjacent OFDM symbols are discontinuous), there is large noise in a signal obtained after a receive end demodulates the OFDM signal. The receive end may not be able to detect a target by using the OFDM signal. Alternatively, when the receive end detects the target by using the OFDM signal, detection accuracy is relatively low.

The embodiments of this application provide a target detection method. In the method, an OFDM technology is used to modulate a signal transmitted by a transmit end. In this modulation mode, some subcarriers in OFDM symbols transmitted by the transmit end are used as pilot subcarriers, and the pilot subcarriers are used to transmit a training sequence known to a receive end. When pilot subcarriers in adjacent OFDM symbols are continuous (referring to FIG. 2), the receive end may detect a target (for example, measure a distance and/or a speed) based on a phase difference between a pilot subcarrier in a received OFDM symbol and a pilot subcarrier in an OFDM symbol transmitted by the transmit end. In addition, some other subcarriers in the OFDM symbols are used as data subcarriers, and the data subcarriers are subcarriers used to carry data. The receive end may perform data communication with the transmit end based on the received data subcarriers.

FIG. 2 is a schematic diagram in which phases of pilot subcarriers in adjacent OFDM symbols are continuous.

As shown in FIG. 2, an OFDM symbol #1 and an OFDM symbol #2 are included in a time length T, where a GI 1 is a guard interval of the OFDM symbol #1, and a GI 2 is a guard interval of the OFDM symbol #2. It should be understood that FIG. 2 shows only a case in which a phase of one subcarrier in an OFDM symbol changes with a time, and it is assumed that the subcarrier is a pilot subcarrier.

It may be learned from FIG. 2 that, at a moment t1, a phase value of a pilot subcarrier in the OFDM symbol #1 is the same as a phase value of a pilot subcarrier in the OFDM symbol #2 (that is, the phase values are both 0). In this case, it may be considered that phases of pilot subcarriers in the adjacent OFDM symbol #1 and OFDM symbol #2 are continuous.

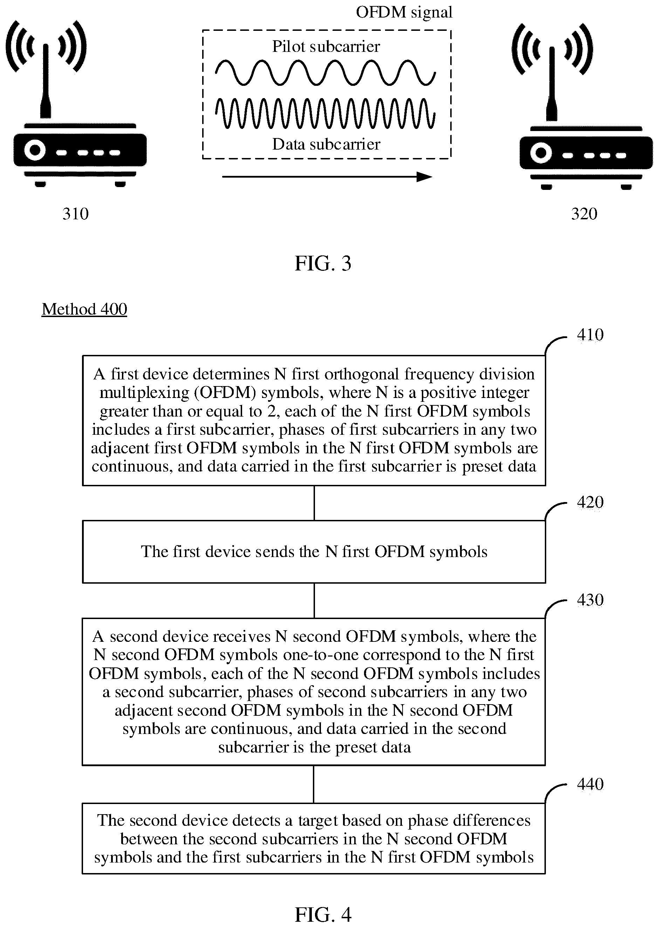

For ease of understanding, an application scenario applicable to the target detection method provided in the embodiments of this application is first described in detail with reference to FIG. 3.

FIG. 3 is a schematic diagram of an application scenario applicable to an embodiment of this application.

As shown in FIG. 3, the application scenario may include at least one first device 310 and one second device 320. The first device 310 sends an OFDM signal, and the OFDM signal is received by the second device 320. The OFDM signal sent by the first device includes a pilot subcarrier and a data subcarrier. The second device 320 may detect the first device 310 (for example, measure a distance and/or a speed) based on a phase difference of the pilot subcarrier in the received OFDM signal. In addition, the second device 320 may further communicate with the first device 310 based on the data subcarrier in the received OFDM signal. It should be understood that detection on the first device 310 by the second device 320 and data communication between the second device 320 and the first device 310 may be simultaneously performed. It should be understood that, in this application scenario, the first device and the second device are different devices. In this case, the first device serves as a transmit end of a detection signal, and the second device serves as a receive end of a detection signal. The first device is a detected target device.

In another application scenario of this embodiment of this application, the application scenario may include at least one communication device and one measurement target. The communication device sends a first OFDM signal. The communication device receives a second OFDM signal. The second OFDM signal is a signal obtained after the first OFDM signal is reflected by the measurement target. The second OFDM signal includes a pilot subcarrier and a data subcarrier. The communication device may detect the measurement target based on a phase difference between a pilot subcarrier in the first OFDM signal sent by the communication device and a pilot subcarrier in the second OFDM signal received by the communication device. In other words, the communication device is a transmit end and a receive end of a detection signal.

In still another application scenario of this embodiment of this application, the application scenario may include at least one first device, one second device, and one measurement target. The first device sends a first OFDM signal. A second OFDM signal is obtained after the first OFDM signal is reflected by the measurement target, and the second OFDM signal is received by the second device. The second OFDM signal includes a pilot subcarrier and a data subcarrier. The second device may detect the measurement target based on a phase difference between a pilot subcarrier in the first OFDM signal and a pilot subcarrier in the received second OFDM signal. In addition, the second device may further communicate with the first device based on the data subcarrier in the received second OFDM signal. In this case, the second device may simultaneously implement detection on the measurement target and data communication with the first device. It should be understood that, in this application scenario, the first device and the second device are different devices. In this case, the first device serves as a transmit end of a detection signal (that is, the first OFDM signal), and the second device serves as a receive end of a detection signal (that is, the second OFDM signal).

In this embodiment of this application, the first device 310 may be a Wireless Fidelity (wireless fidelity, Wi-Fi) device, a router, a terminal device, or a station (station, STA). This is not limited in this embodiment of this application. The second device 320 may also be a Wi-Fi device, a router, a terminal device, or a STA. This is not limited in this embodiment of this application. For example, a WLAN is used as an example. In this embodiment of this application, the first device may be a Wi-Fi device, and the second device may also be a Wi-Fi device.

It should be understood that FIG. 3 is merely an example, and this should not constitute any limitation on this application. For example, in some application scenarios, more first devices and more second devices may be further included. Each first device and each second device may communicate with each other by using a wireless protocol. For example, in some other application scenarios, more communication devices and more measurement targets may be further included. The communication devices may communicate with each other by using a wireless protocol. For example, in still some other application scenarios, more first devices, more second devices, and more measurement targets may be further included. Each first device and each second device may communicate with each other by using a wireless protocol.

A type of the wireless protocol is not specifically limited in this application. For example, the wireless protocol may be a Wi-Fi protocol, or may be a ZigBee (ZigBee) protocol.

With reference to FIG. 4, the following describes in detail the target detection method provided in the embodiments of this application.

FIG. 4 is a schematic flowchart of a target detection method 400 according to an embodiment of this application. As shown in FIG. 4, the method 400 includes step 410 to step 440, and the steps are described in detail below.

Step 410: A first device determines N first orthogonal frequency division multiplexing (OFDM) symbols, where N is a positive integer greater than or equal to 2, each of the N first OFDM symbols includes a first subcarrier, phases of first subcarriers in any two adjacent first OFDM symbols in the N first OFDM symbols are continuous, and data carried in the first subcarrier is preset data.

It should be understood that each first OFDM symbol may include one first subcarrier, or may include two first subcarriers, or may include N first subcarriers, where N is a positive integer greater than or equal to 3.

In some embodiments, the first subcarrier may be a pilot subcarrier.

In some other embodiments, each first OFDM symbol may include a plurality of data subcarriers and one pilot subcarrier. If a data subcarrier carries the preset data, the data subcarrier is the first subcarrier.

In this embodiment of this application, the data carried in the first subcarrier is the preset data, and a type of the preset data is not specifically limited. For example, the preset data may be a continuous constant value. Alternatively, the preset data may be a continuous sine wave. The preset data is a piece of data known to the first device.

In some embodiments, the preset data carried in the first subcarrier is a piece of data partially known to a second device. For example, the second device knows only phase and frequency information of the preset data.

In some other embodiments, the preset data is a piece of data fully known to the second device. For example, the second device knows all information such as a phase, an amplitude, and a frequency of the preset data.

In this embodiment of this application, a period of the first subcarrier included in the first OFDM symbol is not specifically limited. For example, the first OFDM symbol may include a first subcarrier of one period. Alternatively, the first OFDM symbol may include first subcarriers of M periods, where M is a positive integer greater than or equal to 2. Specifically, when M is equal to 3, the first OFDM symbol includes first subcarriers of three periods.

In this embodiment of this application, N OFDM symbols (that is, an example of the N first OFDM symbols) sent by the first device may be determined in the following four manners:

For ease of understanding, a method for determining the N OFDM symbols is described in detail below by using an example in which the target detection method provided in this application is applied to a Wi-Fi system.

Manner 1: Phases of second subcarriers in N reference OFDM symbols are compensated based on N phase compensation values, to obtain the N OFDM symbols (that is, an example of the N first OFDM symbols), where phases of second subcarriers in any two adjacent reference OFDM symbols in the N reference OFDM symbols are discontinuous, and the compensated second subcarriers are the first subcarriers.

It should be understood that a GI before the reference OFDM symbol includes a subcarrier, and the subcarrier is a part of a first subcarrier in the reference OFDM symbol.

In this embodiment of this application, phase compensation performed on a phase of the first subcarrier in the reference OFDM symbol may also be understood as compensation performed on a phase of a subcarrier included in the reference OFDM symbol and compensation performed on a phase of the subcarrier included in the GI before the reference OFDM symbol.

In this embodiment of this application, phases of first subcarriers in adjacent OFDM symbols are continuous. That is, in the N OFDM symbols, a first subcarrier in a first OFDM symbol and a first subcarrier in a second OFDM symbol are continuous, the first subcarrier in the second OFDM symbol and a first subcarrier in a third OFDM symbol are continuous, and so on. That the first subcarrier in the first OFDM symbol and the first subcarrier in the second OFDM symbol in the N OFDM symbols are continuous may be understood as: A phase value that is of the first subcarrier in the first OFDM symbol and that is at an end moment of the first OFDM symbol is the same as a phase value that is of a subcarrier in a GI before the second OFDM symbol and that is at a start moment of the GI. That the first subcarrier in the second OFDM symbol and the first subcarrier in the third OFDM symbol are continuous may be understood as: A phase value that is of the first subcarrier in the second OFDM symbol and that is at an end moment of the second OFDM symbol is the same as a phase value that is of a subcarrier in a GI before the third OFDM symbol and that is at a start moment of the GI.

In some embodiments, the compensating for phases of second subcarriers in N reference OFDM symbols, to obtain the N OFDM symbols includes: performing phase compensation on a phase of a second subcarrier in an $i^{th}$ reference OFDM symbol in the N reference OFDM symbols based on an $i^{th}$ phase compensation value in the N phase compensation values, to obtain an $i^{th}$ OFDM symbol in the N OFDM symbols, where the $i^{th}$ phase compensation value is a difference between a phase value corresponding to an end moment of an $(i-1)^{th}$ reference OFDM symbol in the N reference OFDM symbols and a phase value at a start moment of a GI corresponding to the $i^{th}$ reference OFDM symbol, and i = 2, ..., and N.

The phase value at the start moment of the GI corresponding to the $i^{th}$ reference OFDM symbol may be understood as a phase value that is of a subcarrier in a GI before the $i^{th}$ reference OFDM symbol and that is at a start moment of the GI.

By way of example rather than limitation, the first device sends the N reference OFDM symbols, a phase of a first subcarrier at a $k^{th}$ location in an $(N-1)^{th}$ reference OFDM symbol and a phase of a first subcarrier at a $k^{th}$ location in an $N^{th}$ reference OFDM symbol are discontinuous, N is a positive integer greater than or equal to 2, and k is a positive integer greater than or equal to 1. A phase value that is of the first subcarrier at the $k^{th}$ location in the $(N-1)^{th}$ reference OFDM symbol and that is corresponding to an end moment of the $(N-1)^{th}$ reference OFDM symbol is 0. In this case, a phase value $\varphi_1$ at a start moment of a GI corresponding to the $N^{th}$ reference OFDM symbol may be obtained by using the following formula:

$$\varphi_1 = 2\pi k \Delta f (T_{IFFT} - T_{GI}) = 2\pi k (1 - \frac{T_{GI}}{T_{IFFT}}) \qquad (1.1)$$

Herein, $\Delta f$ is a phase difference between the first subcarrier at the $k^{th}$ location in the $(N-1)^{th}$ OFDM symbol and the first subcarrier at the $k^{th}$ location in the $N^{th}$ OFDM symbol; $T_{IFFT}$ is a length of the $(N-1)^{th}$ OFDM symbol, and the length does not include a length of a GI corresponding to the $(N-1)^{th}$ OFDM symbol; and $T_{GI}$ is a length of a GI before the $(N-1)^{th}$ OFDM symbol.

It may be learned from the formula (1.1) that, to enable the phase of the first subcarrier at the $k^{th}$ location in the $(N-1)^{th}$ reference OFDM symbol and the phase of the first subcarrier at the $k^{th}$ location in the $N^{th}$ reference OFDM symbol to be continuous, a value of $\varphi_k$ should be an integer multiple of $2\pi$. Phase compensation is performed on the first subcarrier at the $k^{th}$ location in the $N^{th}$ reference OFDM symbol, and a compensation value $\varphi_m$ may be obtained by using the following formula:

$$\varphi_m = e^{j2\pi k(N-1)\frac{T_{GI}}{T_{IFFT}}} \qquad (1.2)$$

Phase compensation is performed on the phase of the first subcarrier at the $k^{th}$ location in the $N^{th}$ reference OFDM symbol in an OFDM signal, and an initial phase value $\varphi_2$ of a first subcarrier at a $k^{th}$ location in a compensated $N^{th}$ OFDM symbol may be obtained by using the following formula:

$$\varphi_2 = \varphi_1 + \varphi_m \qquad (1.3)$$

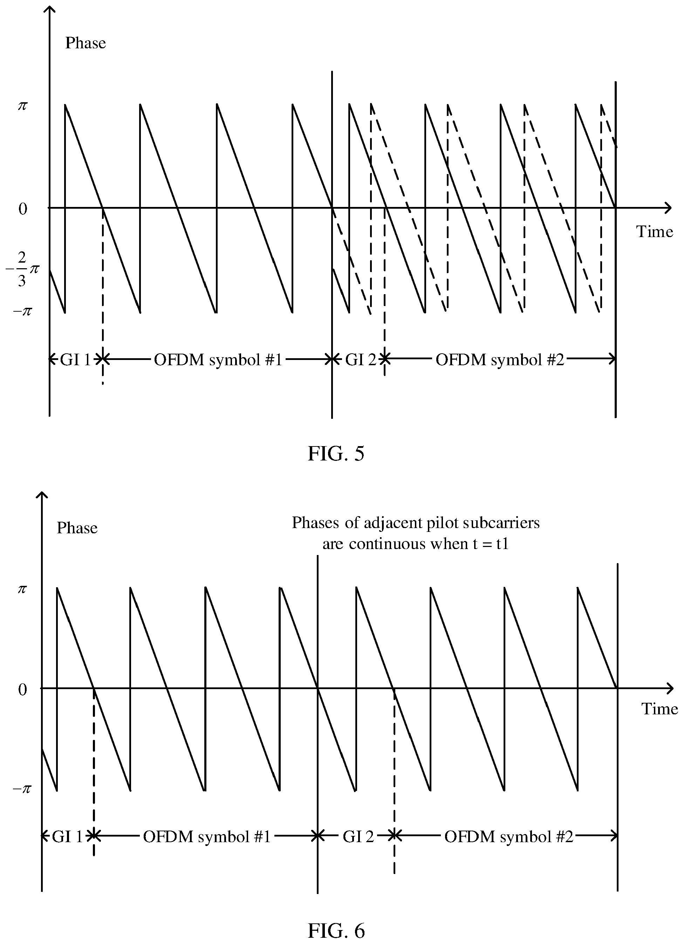

FIG. 5 is a case in which phases of adjacent subcarriers in OFDM symbols change with a time.

In some embodiments, the first device sends two OFDM symbols, which are respectively an OFDM symbol #1 and an OFDM symbol #2. As shown by solid lines in FIG. 5, due to existence of a guard interval (GI), phases of the adjacent OFDM symbol #1 and OFDM symbol #2 are discontinuous at a moment t1. A phase of a first subcarrier at a location 16 in the OFDM symbol #1 is 0 at the moment t1, and a phase of a GI before a first subcarrier at a location 16 in the OFDM symbol #2 is $-\frac{2}{3}\pi$ at the moment t1. It may be learned from the formula (1.1) to the formula (1.3) that a phase of the first subcarrier at the location 16 in the OFDM symbol #2 is compensated by $\frac{2}{3}\pi$, and a compensated first subcarrier is shown by a dashed line in FIG. 5. It may be learned that the phase of the first subcarrier in the OFDM symbol #1 and a phase of the compensated first subcarrier in the OFDM symbol #2 are continuous at the moment t1.

In some other embodiments, the first device sends three OFDM symbols, which are respectively an OFDM symbol #1, an OFDM symbol #2, and an OFDM symbol #3. It is assumed that a phase value of a phase of a first subcarrier at a location 24 in the OFDM symbol #1 is 0 at an end moment of the OFDM symbol #1, a phase value of a GI before a first subcarrier at a location 24 in the OFDM symbol #2 is $-\frac{2}{3}\pi$ , and a phase value of a GI before a first subcarrier at a location 24 in the OFDM symbol #3 is $-\frac{4}{3}\pi$ . Based on the formula (1.1) to the formula (1.3), it is obtained that a phase compensation value of the first subcarrier at the location 24 in the OFDM symbol #1 is - $-\frac{2}{3}\pi$ , and a phase compensation value of the first subcarrier at the location 24 in the OFDM symbol #2 is $-\frac{4}{3}\pi$ . That is, a phase value of the first subcarrier at the location 24 in the OFDM symbol #1 is compensated by $-\frac{2}{3}\pi$ , and a phase value of the first subcarrier at the location 24 in the OFDM symbol #2 is compensated by two times $-\frac{2}{3}\pi$ . If the first device sends N OFDM symbols, a phase of an $i^{th}$ OFDM symbol is compensated by (i-1) times $-\frac{2}{3}\pi$ , where N is a positive integer greater than or equal to 2, i is a positive integer greater than or equal to 2, and i is less than or equal to N.

In the foregoing, a phase of a first subcarrier in an OFDM symbol and a phase of a subcarrier included in a GI before the OFDM symbol are compensated, so that phases of first subcarriers in adjacent OFDM symbols are continuous.

Manner 2: A length of a GI before each OFDM symbol (that is, an example of the N first OFDM symbols) is determined based on the period of the first subcarrier.

That the length of the GI before each OFDM symbol is determined based on the period of the first subcarrier may be understood as: The length of the GI before the OFDM symbol is adjusted, so that the period of the first subcarrier in the OFDM symbol is a positive integer multiple of an adjusted length of the GI.

By way of example rather than limitation, the first device sends the N OFDM symbols, and it is assumed that a phase of a first subcarrier at a $k^{th}$ location in an $(N-1)^{th}$ OFDM symbol and a phase of a first subcarrier at a $k^{th}$ location in an $N^{th}$ OFDM symbol are discontinuous, N is a positive integer greater than or equal to 2, and $k$ is a positive integer greater than or equal to 1. A phase value that is of the first subcarrier at the $k^{th}$ location in the $(N-1)^{th}$ OFDM symbol and that is corresponding to an end moment of the $(N-1)^{th}$ OFDM symbol is 0. In this case, a phase value $\varphi_k$ at a start moment of a GI corresponding to the $N^{th}$ OFDM symbol may be obtained by using the following formula:

$$\varphi_k = 2\pi k \Delta f (T_{IFFT} - T_{GI}) = 2\pi k (1 - \frac{T_{GI}}{T_{IFFT}}) \qquad (2.1)$$

Herein, $\Delta f$ is a phase difference between the first subcarrier at the $k^{th}$ location in the $(N-1)^{th}$ OFDM symbol and the first subcarrier at the $k^{th}$ location in the $N^{th}$ OFDM symbol; $T_{IFFT}$ is a length of the $(N-1)^{th}$ OFDM symbol, and the length does not include a length of a GI corresponding to the $(N-1)^{th}$ OFDM symbol; and $T_{GI}$ is a length of a GI before the $(N-1)^{th}$ OFDM symbol.

It may be learned from the formula (2.1) that, to enable the phase of the first subcarrier at the $k^{th}$ location in the $(N-1)^{th}$ OFDM symbol and the phase of the first subcarrier at the $k^{th}$ location in the $N^{th}$ OFDM symbol to be continuous, a value of $\varphi_k$ should be an integer multiple of $2\pi$ . For the first subcarrier at the $k^{th}$ location, if $k\frac{T_{GI}}{T_{IFFT}}$ is an integer, and $kT_{GI}$ is an integer multiple of $T_{IFFT}$ , a value of $\varphi_k$ is an integer multiple of $2\pi$ . In this case, phases of first subcarriers in adjacent OFDM symbols are continuous. $T_{GI}$ may be calculated by using the following formula:

$$T_{GI} = \frac{m}{k} T_{IFFT} \qquad (2.2)$$

Herein, *m* is a positive integer greater than or equal to 1.

FIG. 6 is a case in which phases of adjacent subcarriers in OFDM symbols change with a time. It may be learned from FIG. 6 that a length of a GI 2 is greater than a length of a GI 1. The length of the GI 2 is determined based on the formula (2.2), so that a phase of a subcarrier in an OFDM symbol #1 and a phase of a subcarrier in an OFDM symbol #2 are continuous at a moment t1.

In the foregoing, a length of a GI before an OFDM symbol is changed, so that phases of first subcarriers in adjacent OFDM symbols are continuous.

Manner 3: It is determined that a subcarrier at a $K_i^{th}$ location in an $i^{th}$ OFDM symbol in the N OFDM symbols (that is, an example of the N first OFDM symbols) is a first subcarrier in the $i^{th}$ OFDM symbol, $K_i$ is an integer multiple of a ratio of a length of the OFDM symbol to a length of a GI before the $i^{th}$ OFDM symbol, $K_i$ is an integer greater than or equal to 1, and i = 1, ..., and N.

In this embodiment of this application, the first subcarrier is a pilot subcarrier.

By way of example rather than limitation, the first device sends the N OFDM symbols, and it is assumed that a phase of a first subcarrier at a $k^{th}$ location in an $(N-1)^{th}$ OFDM symbol and a phase of a first subcarrier at a $k^{th}$ location in an $N^{th}$ OFDM symbol are discontinuous, N is a positive integer greater than or equal to 2, and k is a positive integer greater than or equal to 1. A phase value that is of the first subcarrier at the $k^{th}$ location in the $(N-1)^{th}$ OFDM symbol and that is corresponding to an end moment of the $(N-1)^{th}$ OFDM symbol is 0. In this case, a phase value $\varphi_k$ at a start moment of a GI corresponding to the $N^{th}$ OFDM symbol may be obtained by using the following formula:

$$\varphi_k = 2\pi k \Delta f (T_{IFFT} - T_{GI}) = 2\pi k (1 - \frac{T_{GI}}{T_{IFFT}}) \tag{3.1}$$

Herein, $\Delta f$ is a phase difference between the first subcarrier at the $k^{th}$ location in the $(N-1)^{th}$ OFDM symbol and the first subcarrier at the $k^{th}$ location in the $N^{th}$ OFDM symbol; $T_{IFFT}$ is a length of the $(N-1)^{th}$ OFDM symbol, and the length does not include a length of a GI corresponding to the $(N-1)^{th}$ OFDM symbol; and $T_{GI}$ is a length of a GI before the $(N-1)^{th}$ OFDM symbol.

It may be learned from the formula (3.1) that, to enable the phase of the first subcarrier at the $k^{th}$ location in the $(N-1)^{th}$ OFDM symbol and the phase of the first subcarrier at the $k^{th}$ location in the $N^{th}$ OFDM symbol to be continuous, a value of $\varphi_k$ should be an integer multiple of $2\pi$.

The value of $\varphi_k$ is an integer multiple of $2\pi$ when a result of the following formula is an integer.

$$\frac{T_{IFFT}}{T_{GI}} = M, \qquad M = 1, 2, 3 ..... N \tag{3.2}$$

Herein, $T_{IFFT}$ is a length of duration of one OFDM symbol, and the length does not include a length of a GI; and $T_{GI}$ is a length of a GI.

Therefore, when a location of a subcarrier in an OFDM symbol meets the formula (3.2), the subcarrier at the location may be selected as a first subcarrier.

By way of example rather than limitation, for an IEEE 802.11 ax standard, an expression of a subcarrier period $T_{IFFT}$ corresponding to a subcarrier at a location k in an OFDM symbol is:

$$T_{IFFT} = \frac{12.8}{k} \tag{3.3}$$

Herein, 12.8 is a length of the OFDM symbol.

For the IEEE 802.11 ax standard, there are three lengths of guard intervals GIs: 0.8 µs, 1.6 µs, and 3.2 µs.

When a GI before an OFDM symbol is 0.8 µs, a subcarrier whose location is *k* in the OFDM symbol is selected as a first subcarrier, and the subcarrier whose location is *k* meets the following formula:

$$\frac{12.8}{kT_{GI}} = \frac{16}{k} = 1, 2, 3 ... N \tag{3.4}$$

That is, a subcarrier whose location is an integer multiple of 16 in the OFDM symbol should be selected as the first subcarrier.

For a GI whose length is 1.6 μs, a subcarrier whose location is an integer multiple of 8 in the OFDM symbol should be selected as the first subcarrier.

For a GI whose length is 3.2 μs, a subcarrier whose location is an integer multiple of 4 in the OFDM symbol should be selected as the first subcarrier.

Table 1 shows locations of first subcarriers obtained with reference to different GI lengths, bandwidth, and resource units (resource unit, RU).

**Table 1 Location of the first subcarrier**

| Channel Bandwidth | RU Size | Location of the First Subcarrier |
|---|---|---|
| 20 MHz | 26, 52 | ± 8, ± 24, ± 40, ± 48, ± 64, ± 80, ± 88, ± 104, ± 112 |
| | 106, 242 | ±24, ± 48, ± 96, ± 112 |
| 40 MHz | 26, 52 | ± 8, ± 24, ± 40, ± 48, ± 64, ± 80, ± 88, ± 104, ± 112, ± 128, ± 144, ± 160, ± 172, ± 184, ± 200, ± 216, ± 224, ± 240 |
| | 106, 242, 484 | ± 8, ± 40, ± 80, ± 104, ± 144, ± 176, ± 208, ± 240 |
| 80 MHz | 26, 52 | ± 8, ± 24, ± 40, ± 48, ± 64, ± 80, ± 88, ± 104, ± 112, ± 128, ± 144, ± 160, ± 172, ± 184, ± 200, ± 216, ± 224, ± 240, ± 256, ± 280, ± 288, ±204, ±320, ±336, ±344, ±360, ±368, ±384, ±400, ±416, ±424, ±440, ±456, ±464, ±480, ±496 |
| | 106, 242, 484, 996 | ±24, ±48, ±88, ±120, ±160, ±184, ±224, ±256, ±264, ±288, ±336, ±360, ±400, ±464, ±496 |
| 160 MHz | 26, 52, 106, 242, | {Location of the first subcarrier in 80 MHz bandwidth - 512, Location of the first subcarrier in 80 MHz bandwidth + 512} |
| | 484 | |
| | 996 | {Location of the first subcarrier in 80 MHz bandwidth - 512, Location of the first subcarrier in 80 MHz bandwidth + 512} |

It should be understood that Table 1 is a location of a first subcarrier in an OFDM symbol obtained when the IEEE 802.11 ax standard is used. Alternatively, another communication protocol standard may be used to obtain the location of the first subcarrier by using the foregoing method.

Manner 4: A location of a subcarrier whose location sequence number meets that a subcarrier period length is an integer multiple of a GI length in an OFDM symbol (that is, an example of the N first OFDM symbols) is reserved, and a piece of preset data is transmitted on a subcarrier that meets the location.

In this embodiment of this application, a type of the preset data is not specifically limited. For example, the preset data may be a continuous constant value. Alternatively, the preset data may be a continuous sine wave. The preset data is a piece of data known to the first device, and the preset data is a piece of data partially or fully known to the second device.

By way of example rather than limitation, for the IEEE 802.11 ax standard, all or some of subcarrier locations whose location sequence numbers are integer multiples of 16 may be reserved and not used for data transmission, and a constant known value may be transmitted on the subcarriers at the locations, so that the subcarriers whose location sequence numbers are integer multiples of 16 continuously generate a single-frequency continuous wave during data transmission.

For example, the first device sends three OFDM symbols, and a piece of continuous preset data is enabled to be transmitted on subcarriers at a location 16 in a first OFDM symbol, a location 16 in a second OFDM symbol, and a location 16 in a third OFDM symbol.

For example, the first device sends three OFDM symbols, and a piece of continuous preset data is enabled to be transmitted on subcarriers at a location 32 in a first OFDM symbol, a location 32 in a second OFDM symbol, and a location 32 in a third OFDM symbol.

By way of example rather than limitation, for the IEEE 802.11ax standard, all or some of subcarrier locations whose location sequence numbers are integer multiples of 8 may be reserved and not used for data transmission, and a constant known value may be transmitted on the subcarriers during entire data transmission, so that the subcarriers whose location sequence numbers are integer multiples of 8 continuously generate a single-frequency continuous wave during data transmission.

For example, the first device sends three OFDM symbols, and a piece of continuous preset data is enabled to be transmitted on subcarriers at a location 8 in a first OFDM symbol, a location 8 in a second OFDM symbol, and a location 8 in a third OFDM symbol.

For example, the first device sends three OFDM symbols, and a piece of continuous preset data is enabled to be transmitted on subcarriers at a location 64 in a first OFDM symbol, a location 64 in a second OFDM symbol, and a location 64 in a third OFDM symbol.

In the foregoing, a piece of preset data is enabled to be transmitted on a subcarrier at a location that is in an OFDM symbol and whose location sequence number value is equal to an integer multiple of a ratio of an OFDM symbol length to a GI length, so that phases of first subcarriers in adjacent OFDM symbols are continuous.

Optionally, in some embodiments, before the first device sends the N OFDM symbols, the first device determines a length of a GI before each OFDM symbol based on a period of a first subcarrier in the OFDM symbol.

In this embodiment of this application, each of the N first OFDM symbols further includes a fourth subcarrier, and the fourth subcarrier may be used to perform data communication.

It should be understood that the fourth subcarrier is a subcarrier carrying data, and phases of fourth subcarriers in adjacent first OFDM symbols may be continuous or discontinuous. The data carried in the fourth subcarrier is a piece of data unknown to a receive end.

In this embodiment of this application, the first device is further configured to: send a header before sending the N OFDM symbols, where the header carries indication information, and the indication information is used to indicate that phases of first subcarriers in any two adjacent OFDM symbols in the N OFDM symbols are continuous.

It should be understood that the indication information may be carried by using at least one of the following signaling: MAC signaling or physical layer signaling.

For example, one bit may be reserved in a SIG field of a signal header, and the bit is used to indicate whether the phases of the first subcarriers in the any two adjacent first OFDM symbols in the N first OFDM symbols are continuous. For example, when the bit is "1", it indicates that the phases of the first subcarriers in the any two adjacent first OFDM symbols in the N first OFDM symbols are continuous; and when the bit is "0", it indicates that phases of first subcarriers in any two adjacent first OFDM symbols in the N first OFDM symbols are discontinuous.

In some implementations, the second device determines, based on the received header, to use the N OFDM symbols corresponding to the header to detect a target. In this case, the bit in the SIG field of the signal header is "1".

In some other implementations, the second device determines, based on the received header, not to use the N OFDM symbols corresponding to the header to detect a target. In this case, the bit in the SIG field of the signal header is "0".

Step 420: The first device sends the N first OFDM symbols.

Step 430: The second device receives N second OFDM symbols, where the N second OFDM symbols one-to-one correspond to the N first OFDM symbols, each of the N second OFDM symbols includes a second subcarrier, phases of second subcarriers in any two adjacent second OFDM symbols in the N second OFDM symbols are continuous, and data carried in the second subcarrier is the preset data.

In some implementations, that the N second OFDM symbols one-to-one correspond to the N first OFDM symbols may be understood as: The N second OFDM symbols are OFDM symbols obtained after the N first OFDM symbols are reflected by a measurement target. For example, the first device sends the N first OFDM symbols, and the measurement target reflects the N first OFDM symbols.

The first OFDM symbols reflected by the measurement device are the second OFDM symbols.

In some other implementations, that the N second OFDM symbols one-to-one correspond to the N first OFDM symbols may be understood as: The N second OFDM symbols are OFDM symbols obtained after a Doppler shift occurs in the N first OFDM symbols in a data transmission process. For example, the first device sends the first OFDM symbols in a movement process. Because the first device moves, a Doppler effect occurs in the first OFDM symbols sent by the first device. The first OFDM symbols that are obtained after the Doppler effect and that are received by the second device are the second OFDM symbols.

Step 440: The second device detects the target based on phase differences between the second subcarriers in the N second OFDM symbols and the first subcarriers in the N first OFDM symbols.

In an implementation, that the second device detects the target based on the phase differences between the second subcarriers and the first subcarriers may be understood as measuring a distance of the target based on the phase differences between the second subcarriers and the first subcarriers and in combination with a phase measurement technology.

In another implementation, that the second device detects the target based on the phase differences between the second subcarriers and the first subcarriers may be understood as measuring a speed of the target based on frequency differences between the second subcarriers and the first subcarriers and in combination with a Doppler shift technology. A frequency of a subcarrier may be obtained through calculation based on a phase of the subcarrier.

In another implementation, that the second device detects the target based on the phase differences between the second subcarriers and the first subcarriers may be measuring a distance of the target based on the phase differences between the second subcarriers and the first subcarriers and in combination with a phase measurement technology, and measuring a speed of the target based on frequency differences between the second subcarriers and the first subcarriers and in combination with a Doppler shift technology.

In this embodiment of this application, that the second device detects the target based on the phase differences between the second subcarriers in the N second OFDM symbols and the first subcarriers in the N first OFDM symbols may be understood as: The second device detects the target based on a phase difference between a subcarrier #B including the second subcarrier in each second OFDM symbol and a subcarrier #A including the first subcarrier in each first OFDM symbol, and in combination with a phase measurement technology.

By way of example rather than limitation, the first device sends the N first OFDM symbols, each first OFDM symbol includes the first subcarrier, a frequency of a carrier #A including the N first subcarriers is $f_0$ (equivalent to a wavelength $\lambda = C / f_0$ ), and a phase of the carrier #A is $\varphi_0$. Symbols obtained after the N first OFDM symbols are reflected by the measurement target are the N second OFDM symbols, each second OFDM symbol includes the second subcarrier, a frequency of a carrier #B including the N second subcarriers is $f_1$, and a phase of the carrier #B is $\varphi$. The second device is configured to receive the N second OFDM symbols. A distance between the first device and the measurement target is R, and a distance between the measurement target and the second device is R.

The phase of the carrier #B in the N second OFDM symbols received by the second device may be obtained by using the following formula:

$$\varphi = \varphi_0 - \frac{4\pi R}{\lambda} \tag{4.1}$$

With reference to the formula (4.1), it may be learned that a phase difference $\Delta\varphi$ between the carrier #A and the carrier #B may be expressed as:

$$\Delta\varphi = \frac{4\pi R}{\lambda} = \frac{4\pi R}{Tc} \tag{4.2}$$

Therefore, the distance R may be expressed as:

$$R = \frac{Tc\Delta\varphi}{4\pi} = \frac{c}{4\pi\Delta f}\Delta\varphi \tag{4.3}$$

Herein, $\Delta f$ is equal to a difference between $f_0$ and $f_1$, and $f_0$ and $f_1$ may be obtained through measurement; $C$ is a speed of light; and T is a time length of the carrier #A, and T and $f_0$ are in a reciprocal relationship. The distance between the first device and the measurement target or the distance between the measurement target and the second device may be calculated with reference to the formula (4.1) to the formula (4.3).

With reference to the formula (4.1), it may be learned that a change rate $\dfrac{d\varphi}{dt}$ that is with a time and that is of the phase of the carrier #B in the N second OFDM symbols received by the second device may be expressed as:

$$\frac{d\varphi}{dt} = (-\frac{4\pi}{\lambda})\frac{dR}{dt} = -\frac{4\pi v}{\lambda} \tag{4.4}$$

A Doppler shift $\Delta f$ between the carrier #A in the N first OFDM symbols and the carrier #B in the N second OFDM symbols may be expressed as:

$$\Delta f = \frac{1}{2\pi}\frac{d\varphi}{dt} = \frac{2v}{\lambda} \tag{4.5}$$

Herein, $\Delta f$ is equal to a difference between $f_0$ and $f_1$, and $f_0$ and $f_1$ may be obtained through measurement. In addition, a wavelength $\lambda$ of a detection signal is known. Therefore, a movement speed of the measurement target may be calculated with reference to the formula (4.1), the formula (4.4), and the formula (4.5).

By way of example rather than limitation, the first device sends the N first OFDM symbols, each first OFDM symbol includes the first subcarrier, a frequency of a carrier #A including the N first subcarriers is $f_0$ (equivalent to a wavelength $\lambda = C / f_0$ ), and a phase of the carrier #A is $\varphi_0$. The second device is configured to receive the N second OFDM symbols. The N second OFDM symbols are OFDM symbols obtained after a Doppler shift occurs in the N first OFDM symbols in a data transmission process. Each second OFDM symbol includes the second subcarrier, a frequency of a carrier #B including the N second subcarriers is $f_1$, and a phase of the carrier #B is $\varphi$. A distance between the first device and the second device is R. The distance between the first device and the second device and a movement speed of the first device may be calculated with reference to the formula (4.1) to the formula (4.5). For brevity, details are not described herein.

In this embodiment of this application, each of the N second OFDM symbols further includes a fourth subcarrier, and the fourth subcarrier may be used to perform data communication. Data carried in the fourth subcarrier is a piece of data unknown to the receive end.

In this embodiment of this application, the second device may detect the target based on the received N second OFDM symbols, and may further perform high-speed communication with the first device. The second device measures the distance of the target based on the phase differences between the second subcarriers in the N second OFDM symbols and the first subcarriers in the N first OFDM symbols and in combination with the phase measurement technology, and the second device measures the speed of the target based on the frequency differences between the second subcarriers in the N second OFDM symbols and the first subcarriers in the N first OFDM symbols and in combination with the Doppler shift technology. The second device performs high-speed communication with the first device based on the data carried in the fourth subcarriers in the N second OFDM symbols.

By using the OFDM signal provided in this embodiment of this application, a communication device may communicate with another communication device. In addition, without changing hardware of the communication device, by using the OFDM signal, the communication device can further improve accuracy of detecting the target (for example, measuring a distance and/or a speed). According to the target detection method provided in this embodiment of this application, the communication device can simultaneously implement accurate detection on the target and high-speed communication with another communication device. In this way, fusion of detection and communication is effectively implemented without affecting communication efficiency between communication devices.

In the foregoing, the target detection method provided in this embodiment of this application is described in detail by using an example in which the first device serves as a signal transmit end and the second device serves as a signal receive end.

In the following, a target detection method provided in an embodiment of this application is described in detail by using an example in which a first device serves as a signal transmit end and a signal receive end. That is, in this application scenario, the signal transmit end and the signal receive end are a same device.

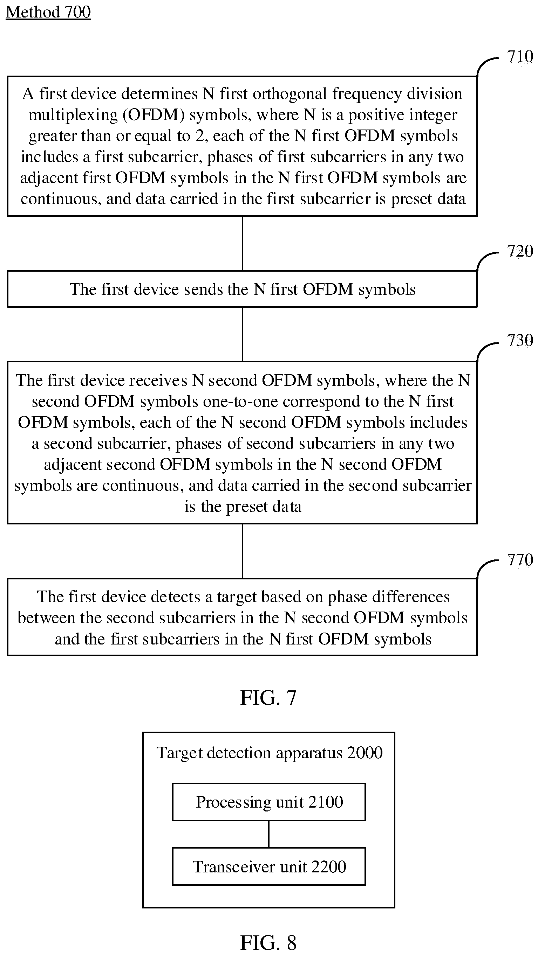

FIG. 7 is a schematic flowchart of a target detection method 700 according to an embodiment of this application. As shown in FIG. 7, the method 700 includes step 710 to step 740, and the steps are described in detail below.

Step 710: A first device determines N first orthogonal frequency division multiplexing (OFDM) symbols, where N is a positive integer greater than or equal to 2, each of the N first OFDM symbols includes a first subcarrier, phases of first subcarriers in any two adjacent first OFDM symbols in the N first OFDM symbols are continuous, and data carried in the first subcarrier is preset data.

In this embodiment of this application, a method in step 710 is the same as the method in step 410. For brevity, details are not described herein.

Step 720: The first device sends the N first OFDM symbols.

Step 730: The first device receives N second OFDM symbols, where the N second OFDM symbols one-to-one correspond to the N first OFDM symbols, each of the N second OFDM symbols includes a second subcarrier, phases of second subcarriers in any two adjacent second OFDM symbols in the N second OFDM symbols are continuous, and data carried in the second subcarrier is the preset data.

In this embodiment of this application, that the N second OFDM symbols one-to-one correspond to the N first OFDM symbols may be understood as: The N second OFDM symbols are OFDM symbols obtained after the N first OFDM symbols are reflected by a measurement target. For example, the first device sends the N first OFDM symbols, and the measurement target reflects the N first OFDM symbols.

The first OFDM symbols reflected by the measurement target are the second OFDM symbols.

Step 740: The first device detects the target based on phase differences between the second subcarriers in the N second OFDM symbols and the first subcarriers in the N first OFDM symbols.

In an implementation, that the first device detects the target based on the phase differences between the second subcarriers and the first subcarriers may be understood as measuring a distance of the target based on the phase differences between the second subcarriers and the first subcarriers and in combination with a phase measurement technology.

In another implementation, that the first device detects the target based on the phase differences between the second subcarriers and the first subcarriers may be understood as measuring a speed of the target based on frequency differences between the second subcarriers and the first subcarriers and in combination with a Doppler shift technology. A frequency of a subcarrier may be obtained through calculation based on a phase of the subcarrier.

In another implementation, that the first device detects the target based on the phase differences between the second subcarriers and the first subcarriers may be measuring a distance of the target based on the phase differences between the second subcarriers and the first subcarriers and in combination with a phase measurement technology, and measuring a speed of the target based on frequency differences between the second subcarriers and the first subcarriers and in combination with a Doppler shift technology.

In this embodiment of this application, a specific method in which the first device detects the target based on the phase differences between the second subcarriers in the N second OFDM symbols and the first subcarriers in the N first OFDM symbols is the same as the method in step 440. For brevity, details are not described herein.

Without changing hardware of a communication device, accuracy of detecting the target by the communication device may be improved by using an OFDM signal provided in this embodiment of this application.

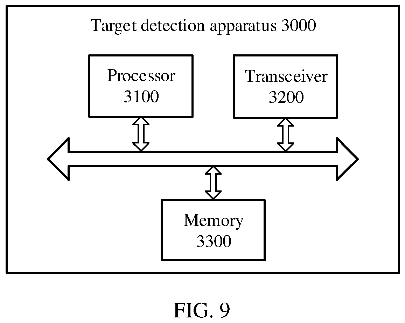

In the foregoing, the methods provided in the embodiments of this application are described in detail with reference to FIG. 4 to FIG. 7. In the following, apparatuses provided in the embodiments of this application are described in detail with reference to FIG. 8 and FIG. 9.

FIG. 8 is a schematic block diagram of a target detection apparatus according to an embodiment of this application. As shown in FIG. 8, the target detection apparatus 2000 may include a processing unit 2100 and a transceiver unit 2200.

In a possible design, the target detection apparatus 2000 may correspond to the first device in the foregoing method embodiments, for example, may be the first device, or a component (such as a chip or a chip system) disposed in the first device.

It should be understood that the target detection apparatus 2000 may correspond to the first device in the method 400 according to the embodiment of this application, and the target detection apparatus 2000 may include a unit configured to perform the method performed by the first device in the method 400 in FIG. 4 and the method 700 in FIG. 7. In addition, the units in the target detection apparatus 2000 and the foregoing other operations and/or functions are respectively used to implement corresponding procedures of the method 400 in FIG. 4 and the method 700 in FIG. 7.

When the target detection apparatus 2000 is configured to perform the method 400 in FIG. 4, the processing unit 2100 may be configured to perform step 410 in the method 400, and the transceiver unit 2200 may be configured to perform step 420 in the method 400. It should be understood that a specific process in which the units perform the foregoing corresponding steps is described in detail in the foregoing method embodiments, and for brevity, details are not described herein.

When the target detection apparatus 2000 is configured to perform the method 700 in FIG. 7, the processing unit 2100 may be configured to perform step 710 and step 740 in the method 700, and the transceiver unit 2200 may be configured to perform step 720 and step 730 in the method 700. It should be understood that a specific process in which the units perform the foregoing corresponding steps is described in detail in the foregoing method embodiments, and for brevity, details are not described herein.

It should be further understood that when the communication apparatus 2000 is a chip or a chip system disposed in the first device, the transceiver unit 2200 in the target detection apparatus 2000 may be implemented by using an input/output interface, and the processing unit 2100 in the target detection apparatus 2000 may be implemented by using a processor, a microprocessor, an integrated circuit, or the like integrated in the chip or the chip system.

In another possible design, the target detection apparatus 2000 may correspond to the second device in the foregoing method embodiments, for example, may be the second device, or a component (such as a chip or a chip system) disposed in the second device.

It should be understood that the target detection apparatus 2000 may correspond to the second device in the method 400 according to the embodiment of this application, and the target detection apparatus 2000 may include a unit configured to perform the method performed by the second device in the method 400 in FIG. 4. In addition, the units in the target detection apparatus 2000 and the foregoing other operations and/or functions are respectively used to implement corresponding procedures of the method 400 in FIG. 4.

When the target detection apparatus 2000 is configured to perform the method 400 in FIG. 4, the processing unit 2100 may be configured to perform step 440 in the method 400, and the transceiver unit 2200 may be configured to perform step 430 in the method 400. It should be understood that a specific process in which the units perform the foregoing corresponding steps is described in detail in the foregoing method embodiments, and for brevity, details are not described herein.

It should be further understood that when the communication apparatus 2000 is a chip or a chip system disposed in the second device, the transceiver unit 2200 in the target detection apparatus 2000 may be implemented by using an input/output interface, and the processing unit 2100 in the target detection apparatus 2000 may be implemented by using a processor, a microprocessor, an integrated circuit, or the like integrated in the chip or the chip system.

FIG. 9 is a schematic block diagram of a target detection apparatus 3000 according to an embodiment of this application. The target detection apparatus 3000 may be applied to the system shown in FIG. 3, to perform functions of the first device or the second device in the foregoing method embodiments. As shown in FIG. 9, the target detection apparatus 3000 includes a processor 3100 and a transceiver 3200, and the processor 3100 is connected to the transceiver 3200. Optionally, the target detection apparatus 3000 further includes a memory 3300, and the memory 3300 is connected to the processor 3100. The processor 3100, the memory 3300, and the transceiver 3200 may communicate with each other by using an internal connection path.

The processor 3100 may be configured to perform an action that is implemented inside the first device and that is described in the foregoing method embodiments, for example, determining N first OFDM symbols. The transceiver 3200 may be configured to perform a sending or receiving action that is performed by the first device and that is described in the foregoing method embodiments, for example, sending N first OFDM symbols. For details, refer to the descriptions in the foregoing method embodiments. Details are not described herein.

It should be understood that the target detection apparatus 3000 shown in FIG. 9 can implement processes related to the first device in the method embodiments shown in FIG. 4 and FIG. 7. Operations and/or functions of modules in the target detection apparatus 3000 are respectively used to implement corresponding procedures in the foregoing method embodiments. For details, refer to the descriptions in the foregoing method embodiments. To avoid repetition, detailed descriptions are properly omitted herein.

The processor 3100 may be configured to perform an action that is implemented inside the second device and that is described in the foregoing method embodiments, for example, detecting a target. The transceiver 3200 may be configured to perform a sending or receiving action that is performed by the second device and that is described in the foregoing method embodiments, for example, receiving N second OFDM symbols. For details, refer to the descriptions in the foregoing method embodiments. Details are not described herein.

It should be understood that the target detection apparatus 3000 shown in FIG. 9 can implement processes related to the second device in the method embodiment shown in FIG. 4. Operations and/or functions of modules in the target detection apparatus 3000 are respectively used to implement corresponding procedures in the foregoing method embodiments. For details, refer to the descriptions in the foregoing method embodiments. To avoid repetition, detailed descriptions are properly omitted herein.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processor (digital signal processor, DSP), a micro control unit (micro controller unit, MCU), a programmable controller (programmable logic device, PLD), or another integrated chip. In an implementation process, steps in the foregoing methods may be implemented by using a hardware integrated logical circuit in the processor, or by using instructions in a form of software. The steps of the method disclosed with reference to the embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in the embodiments of this application may be an integrated circuit chip, and has a signal processing capability. In an implementation process, the steps in the foregoing method embodiments may be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and logical block diagrams that are disclosed in the embodiments of this application may be implemented or performed. The general-purpose processor may be a microprocessor, or the processor may be any conventional processor, or the like. The steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in the embodiments of this application, this application further provides a computer program product. The computer program product includes computer program code. When the computer program code is run on a computer, the computer is enabled to perform the methods respectively performed by the first device and the second device in the embodiment shown in FIG. 4, or the computer is enabled to perform the method performed by the first device in the embodiment shown in FIG. 7.

According to the methods provided in the embodiments of this application, this application further provides a computer-readable medium. The computer-readable medium stores program code. When the program code is run on a computer, the computer is enabled to perform the methods respectively performed by the first device and the second device in the embodiment shown in FIG. 4, or the computer is enabled to perform the method performed by the first device in the embodiment shown in FIG. 7.

According to the methods provided in the embodiments of this application, this application further provides a system, including one or more first devices and one or more second devices.

The first device and the second device in the foregoing apparatus embodiments completely correspond to the first device and the second device in the method embodiments, and corresponding modules or units perform corresponding steps. For example, a transceiver unit (transceiver) performs a step of receiving or sending in the method embodiments, and steps other than sending and receiving may be performed by a processing unit (processor). For a function of a specific unit, refer to a corresponding method embodiment. There may be one or more processors.

A person of ordinary skill in the art may be aware that, in combination with illustrative logical blocks (illustrative logical blocks) described in the embodiments disclosed in this specification, steps (steps) can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a computer software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A target detection system, comprising:

   a first device, configured to determine N first orthogonal frequency division multiplexing (OFDM) symbols, wherein N is a positive integer greater than or equal to 2, each of the N first OFDM symbols comprises a first subcarrier, phases of first subcarriers in any two adjacent first OFDM symbols in the N first OFDM symbols are continuous, data carried in the first subcarrier is preset data, and
   the first device is further configured to send the N first OFDM symbols; and
   a second device, configured to receive N second OFDM symbols, wherein the N second OFDM symbols one-to-one correspond to the N first OFDM symbols, each of the N second OFDM symbols comprises a second subcarrier, phases of second subcarriers in any two adjacent second OFDM symbols in the N second OFDM symbols are continuous, data carried in the second subcarrier is the preset data, and
   the second device is further configured to detect a target based on phase differences between the second subcarriers in the N second OFDM symbols and the first subcarriers in the N first OFDM symbols.

2. The system according to claim 1, wherein the first device is specifically configured to:
   compensate for phases of third subcarriers in N reference OFDM symbols based on N phase compensation values, to obtain the N first OFDM symbols, wherein phases of third subcarriers in any two adjacent reference OFDM symbols in the N reference OFDM symbols are discontinuous, and the compensated third subcarriers are the first subcarriers.

3. The system according to claim 2, wherein the first device is specifically configured to:
   perform phase compensation on a phase of a third subcarrier in an $i^{th}$ reference OFDM symbol in the N reference OFDM symbols based on an $i^{th}$ phase compensation value in the N phase compensation values, to obtain an $i^{th}$ first OFDM symbol in the N first OFDM symbols, wherein the $i^{th}$ phase compensation value is a difference between a phase value corresponding to an end moment of an $(i-1)^{th}$ reference OFDM symbol in the N reference OFDM symbols and a phase value at a start moment of a guard interval (GI) corresponding to the $i^{th}$ reference OFDM symbol, and $i = 2, ...,$ and N.

4. The system according to claim 1, wherein a subcarrier at a $K_i^{th}$ location in an $i^{th}$ first OFDM symbol in the N first OFDM symbols is the first subcarrier in the $i^{th}$ first OFDM symbol, $K_i$ is an integer multiple of a ratio of a length of the OFDM symbol to a length of a GI before the $i^{th}$ first OFDM symbol, $K_i$ is an integer greater than or equal to 1, and $i = 1, ...,$ and N.

5. The system according to claim 1, wherein the first device is further configured to:
   before the first device sends the N first OFDM symbols, determine a length of a GI before each first OFDM symbol based on a period of the first subcarrier.

6. The system according to any one of claims 1 to 5, wherein
   each of the N first OFDM symbols further comprises a fourth subcarrier, and the fourth subcarrier is used to perform data communication.

7. The system according to any one of claims 1 to 6, wherein the first device is further configured to:
   send a header before sending the N OFDM symbols, wherein the header carries indication information, and the indication information is used to indicate that the phases of the first subcarriers in the any two adjacent first OFDM symbols in the N first OFDM symbols are continuous.

8. A target detection method, comprising:

   determining, by a first device, N first orthogonal frequency division multiplexing (OFDM) symbols, wherein N is a positive integer greater than or equal to 2, each of the N first OFDM symbols comprises a first subcarrier, phases of first subcarriers in any two adjacent first OFDM symbols in the N first OFDM symbols are continuous, and data carried in the first subcarrier is preset data; and

sending, by the first device, the N first OFDM symbols, wherein the first subcarriers in the N first OFDM symbols are used to detect a target.

9. The method according to claim 8, wherein the method further comprises:

receiving, by the first device, N second OFDM symbols, wherein the N second OFDM symbols one-to-one correspond to the N first OFDM symbols, each of the N second OFDM symbols comprises a second subcarrier, phases of second subcarriers in any two adjacent second OFDM symbols in the N second OFDM symbols are continuous, and data carried in the second subcarrier is the preset data; and

detecting, by the first device, the target based on phase differences between the second subcarriers in the N second OFDM symbols and the first subcarriers in the N first OFDM symbols.

10. The method according to claim 8 or 9, wherein the determining N first OFDM symbols comprises:
compensating for phases of third subcarriers in N reference OFDM symbols based on N phase compensation values, to obtain the N first OFDM symbols, wherein phases of third subcarriers in any two adjacent reference OFDM symbols in the N reference OFDM symbols are discontinuous, and the compensated third subcarriers are the first subcarriers.

11. The method according to claim 10, wherein the compensating for phases of third subcarriers in N reference OFDM symbols based on phase compensation values, to obtain the N first OFDM symbols comprises:
performing phase compensation on a phase of a third subcarrier in an $i^{th}$ reference OFDM symbol in the N reference OFDM symbols based on an $i^{th}$ phase compensation value in the N phase compensation values, to obtain an $i^{th}$ first OFDM symbol in the N first OFDM symbols, wherein the $i^{th}$ phase compensation value is a difference between a phase value corresponding to an end moment of an $(i-1)^{th}$ reference OFDM symbol in the N reference OFDM symbols and a phase value at a start moment of a guard interval (GI) corresponding to the $i^{th}$ reference OFDM symbol, and i = 2, ..., and N.

12. The method according to claim 8 or 9, wherein a subcarrier at a $K_i^{th}$ location in an $i^{th}$ first OFDM symbol in the N first OFDM symbols is the first subcarrier in the $i^{th}$ first OFDM symbol, $K_i$ is an integer multiple of a ratio of a length of the first OFDM symbol to a length of a GI before the $i^{th}$ first OFDM symbol, $K_i$ is an integer greater than or equal to 1, and i = 1, ..., and N.

13. The method according to claim 8 or 9, wherein before the sending, by the first device, the N first OFDM symbols, the method further comprises:
determining a length of a GI before each first OFDM symbol based on a period of the first subcarrier.

14. The method according to any one of claims 8 to 13, wherein
each of the N first OFDM symbols further comprises a fourth subcarrier, and the fourth subcarrier is used to perform data communication.

15. The method according to any one of claims 8 to 14, wherein before the N first OFDM symbols are sent, the method further comprises:
sending a header, wherein the header carries indication information, and the indication information is used to indicate that the phases of the first subcarriers in the any two adjacent first OFDM symbols in the N first OFDM symbols are continuous.

16. A target detection method, comprising:

receiving, by a second device, N second orthogonal frequency division multiplexing (OFDM) symbols, wherein N is a positive integer greater than or equal to 2, the N second OFDM symbols one-to-one correspond to N first OFDM symbols, each of the N first OFDM symbols comprises a first subcarrier, phases of first subcarriers in any two adjacent first OFDM symbols in the N first OFDM symbols are continuous, and data carried in the first subcarrier is preset data; and each of the N second OFDM symbols comprises a second subcarrier, phases of second subcarriers in any two adjacent second OFDM symbols in the N second OFDM symbols are continuous, and data carried in the second subcarrier is the preset data; and

detecting, by the second device, a target based on phase differences between the second subcarriers in the N second OFDM symbols and the first subcarriers in the N first OFDM symbols.

17. The method according to claim 16, wherein a subcarrier at a $K_i$th location in an $i$th first OFDM symbol in the N first OFDM symbols is the first subcarrier in the $i$th first OFDM symbol, $K_i$ is an integer multiple of a ratio of a length of the OFDM symbol to a length of a GI before the $i$th first OFDM symbol, $K_i$ is an integer greater than or equal to 1, and i = 1, ..., and N.

18. The method according to claim 16 or 17, wherein
   each of the N first OFDM symbols further comprises a fourth subcarrier, and the fourth subcarrier is used to perform data communication.

19. A target detection apparatus, comprising:

   a processing unit, configured to determine N first orthogonal frequency division multiplexing (OFDM) symbols, wherein N is a positive integer greater than or equal to 2, each of the N first OFDM symbols comprises a first subcarrier, phases of first subcarriers in any two adjacent first OFDM symbols in the N first OFDM symbols are continuous, and data carried in the first subcarrier is preset data; and
   a transceiver unit, configured to send the N first OFDM symbols, wherein the first subcarriers in the N first OFDM symbols are used to detect a target.

20. The apparatus according to claim 19, wherein

   the transceiver unit is further configured to receive N second OFDM symbols, wherein the N second OFDM symbols one-to-one correspond to the N first OFDM symbols, each of the N second OFDM symbols comprises a second subcarrier, phases of second subcarriers in any two adjacent second OFDM symbols in the N second OFDM symbols are continuous, and data carried in the second subcarrier is the preset data; and
   the processing unit is further configured to detect the target based on phase differences between the second subcarriers in the N second OFDM symbols and the first subcarriers in the N first OFDM symbols.

21. The apparatus according to claim 19 or 20, wherein the processing unit is specifically configured to:
   compensate for phases of third subcarriers in N reference OFDM symbols based on N phase compensation values, to obtain the N first OFDM symbols, wherein phases of third subcarriers in any two adjacent reference OFDM symbols in the N reference OFDM symbols are discontinuous, and the compensated third subcarriers are the first subcarriers.

22. The apparatus according to claim 21, wherein the processing unit is specifically configured to:
   perform phase compensation on a phase of a third subcarrier in an $i$th reference OFDM symbol in the N reference OFDM symbols based on an $i$th phase compensation value in the N phase compensation values, to obtain an $i$th first OFDM symbol in the N first OFDM symbols, wherein the $i$th phase compensation value is a difference between a phase value corresponding to an end moment of an $(i-1)$th reference OFDM symbol in the N reference OFDM symbols and a phase value at a start moment of a guard interval (GI) corresponding to the $i$th reference OFDM symbol, and i = 2, ..., and N.

23. The apparatus according to claim 19 or 20, wherein a subcarrier at a $K_i$th location in an $i$th first OFDM symbol in the N first OFDM symbols is the first subcarrier in the $i$th first OFDM symbol, $K_i$ is an integer multiple of a ratio of a length of the first OFDM symbol to a length of a GI before the $i$th first OFDM symbol, $K_i$ is an integer greater than or equal to 1, and i = 1, ..., and N.

24. The apparatus according to claim 19 or 20, wherein the transceiver unit is further configured to:
   before the first device sends the N first OFDM symbols, determine a length of a GI before each first OFDM symbol based on a period of the first subcarrier.

25. The apparatus according to any one of claims 19 to 24, wherein
   each of the N first OFDM symbols further comprises a fourth subcarrier, and the fourth subcarrier is used to perform data communication.

26. The apparatus according to any one of claims 19 to 25, wherein the transceiver unit is further configured to:

send a header before sending the N OFDM symbols, wherein the header carries indication information, and the indication information is used to indicate that the phases of the first subcarriers in the any two adjacent first OFDM symbols in the N first OFDM symbols are continuous.

27. A target detection apparatus, comprising:

a transceiver unit, configured to receive N second orthogonal frequency division multiplexing (OFDM) symbols, wherein N is a positive integer greater than or equal to 2, the N second OFDM symbols one-to-one correspond to N first OFDM symbols, each of the N first OFDM symbols comprises a first subcarrier, phases of first subcarriers in any two adjacent first OFDM symbols in the N first OFDM symbols are continuous, and data carried in the first subcarrier is preset data; and each of the N second OFDM symbols comprises a second subcarrier, phases of second subcarriers in any two adjacent second OFDM symbols in the N second OFDM symbols are continuous, and data carried in the second subcarrier is the preset data; and
a processing unit, configured to detect a target based on phase differences between the second subcarriers in the N second OFDM symbols and the first subcarriers in the N first OFDM symbols.

28. The apparatus according to claim 27, wherein a subcarrier at a $K_i$th location in an $i$th first OFDM symbol in the N first OFDM symbols is the first subcarrier in the $i$th first OFDM symbol, $K_i$ is an integer multiple of a ratio of a length of the OFDM symbol to a length of a GI before the $i$th first OFDM symbol, $K_i$ is an integer greater than or equal to 1, and i = 1, ..., and N.

29. The apparatus according to claim 27 or 28, wherein each of the N first OFDM symbols further comprises a fourth subcarrier, and the fourth subcarrier is used to perform data communication.

30. A communication apparatus, comprising at least one processor, wherein the at least one processor is configured to be coupled to a memory, and read and execute instructions in the memory, to implement the method according to any one of claims 8 to 15 or any one of claims 16 to 18.

31. A computer-readable storage medium, comprising instructions, wherein when the instructions are run on a computer, the computer is enabled to perform the method according to any one of claims 8 to 15 or any one of claims 16 to 18.

32. A computer program product, comprising a computer program, wherein when the computer program product runs on a computer, the computer is enabled to perform the method according to any one of claims 8 to 15.

33. A chip, comprising at least one processor and an interface, wherein the at least one processor is configured to invoke and run a computer program, to enable the chip to perform the method according to any one of claims 8 to 15 or any one of claims 16 to 18.

FIG. 1

FIG. 2

OFDM signal

Pilot subcarrier

Data subcarrier

310    320

FIG. 3

Method 400

410

A first device determines N first orthogonal frequency division multiplexing (OFDM) symbols, where N is a positive integer greater than or equal to 2, each of the N first OFDM symbols includes a first subcarrier, phases of first subcarriers in any two adjacent first OFDM symbols in the N first OFDM symbols are continuous, and data carried in the first subcarrier is preset data

420

The first device sends the N first OFDM symbols

430

A second device receives N second OFDM symbols, where the N second OFDM symbols one-to-one correspond to the N first OFDM symbols, each of the N second OFDM symbols includes a second subcarrier, phases of second subcarriers in any two adjacent second OFDM symbols in the N second OFDM symbols are continuous, and data carried in the second subcarrier is the preset data

440

The second device detects a target based on phase differences between the second subcarriers in the N second OFDM symbols and the first subcarriers in the N first OFDM symbols

FIG. 4

FIG. 5

FIG. 6

Method 700

710

A first device determines N first orthogonal frequency division multiplexing (OFDM) symbols, where N is a positive integer greater than or equal to 2, each of the N first OFDM symbols includes a first subcarrier, phases of first subcarriers in any two adjacent first OFDM symbols in the N first OFDM symbols are continuous, and data carried in the first subcarrier is preset data

720

The first device sends the N first OFDM symbols

730

The first device receives N second OFDM symbols, where the N second OFDM symbols one-to-one correspond to the N first OFDM symbols, each of the N second OFDM symbols includes a second subcarrier, phases of second subcarriers in any two adjacent second OFDM symbols in the N second OFDM symbols are continuous, and data carried in the second subcarrier is the preset data

770

The first device detects a target based on phase differences between the second subcarriers in the N second OFDM symbols and the first subcarriers in the N first OFDM symbols

FIG. 7

Target detection apparatus 2000

Processing unit 2100

Transceiver unit 2200

FIG. 8

Target detection apparatus 3000

Processor
3100

Transceiver
3200

Memory
3300

FIG. 9

**EP 4 080 841 A1**

## INTERNATIONAL SEARCH REPORT

| International application No. |
|---|
| **PCT/CN2020/115310** |

**A.    CLASSIFICATION OF SUBJECT MATTER**

H04L 27/26(2006.01)i

According to International Patent Classification (IPC) or to both national classification and IPC

**B.    FIELDS SEARCHED**

Minimum documentation searched (classification system followed by classification symbols)

H04L; H04Q; H04W; H04B

Documentation searched other than minimum documentation to the extent that such documents are included in the fields searched

Electronic data base consulted during the international search (name of data base and, where practicable, search terms used)

CNPAT, CNKI, WPI, EPODOC: 探测, 测距, 测速, 子载波, 相位, 连续, 差, OFDM, measure, detect, distance, speed, sub carrier, phase, consecutive, continuous, difference

**C.    DOCUMENTS CONSIDERED TO BE RELEVANT**

| Category* | Citation of document, with indication, where appropriate, of the relevant passages | Relevant to claim No. |
|---|---|---|
| A | CN 101217818 A (BEIJING NORTHERN FIBERHOME TECHNOLOGIES CO., LTD.) 09 July 2008 (2008-07-09)<br>entire document | 1-33 |
| A | CN 101815342 A (BEIJING XINWEI TELECOM TECHNOLOGY INC.) 25 August 2010 (2010-08-25)<br>entire document | 1-33 |
| A | CN 107347210 A (JIANGSU SYAN TECH CO., LTD.) 14 November 2017 (2017-11-14)<br>entire document | 1-33 |
| A | CN 108549048 A (WUHAN UNIVERSITY) 18 September 2018 (2018-09-18)<br>entire document | 1-33 |
| A | CN 110471051 A (GUANGZHOU UNIVERSITY) 19 November 2019 (2019-11-19)<br>entire document | 1-33 |
| A | US 2003025914 A1 (DEMAREST, Frank C.) 06 February 2003 (2003-02-06)<br>entire document | 1-33 |
| A | WO 2019166429 A1 (IEE INTERNATIONAL ELECTRONICS & ENGINEERING S.A. et al.) 06 September 2019 (2019-09-06)<br>entire document | 1-33 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 November 2020** | **16 December 2020** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

28

**INTERNATIONAL SEARCH REPORT**
Information on patent family members

International application No.

**PCT/CN2020/115310**

| Patent document cited in search report | | | Publication date (day/month/year) | Patent family member(s) | | | Publication date (day/month/year) |
|---|---|---|---|---|---|---|---|
| CN | 101217818 | A | 09 July 2008 | None | | | |
| CN | 101815342 | A | 25 August 2010 | None | | | |
| CN | 107347210 | A | 14 November 2017 | None | | | |
| CN | 108549048 | A | 18 September 2018 | None | | | |
| CN | 110471051 | A | 19 November 2019 | None | | | |
| US | 2003025914 | A1 | 06 February 2003 | None | | | |
| WO | 2019166429 | A1 | 06 September 2019 | CN | 111758237 | A | 09 October 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010072372